# EUROPEAN PATENT APPLICATION

(11) **EP 2 860 512 A1**
(43) Date of publication of application: **15.04.2015**
(21) Application number: 13800270.4
(22) Date of filing: 30.05.2013
(51) Int. Cl.: G01N 17/00, G01N 1/28

(54) **CORROSION RESISTANCE TESTING DEVICE**

(30) Priority: 08.06.2012 JP 2012131038
(71) Applicant: Naigai Chemical Products Co., Ltd., Tokyo 140-0013 (JP)
(72) Inventor: MATSUMURA, Masanobu, Higashihiroshima-shi Hiroshima 739-0031 (JP); MARUGAME, Kazuo, Tokyo 140-0013 (JP)
(74) Representative: Corret, Hélène
(86) International application number: PCT/JP2013/065043
(87) International publication number: WO 2013/183538

(57) **Abstract**

This invention is to provide a corrosion-resistant test device capable of minimizing a change in position of a test piece.

The corrosion-resistant test device installed in a flow path of a system which needs a corrosion-resistant test, the corrosion-resistant test device comprising: a chamber to which a test liquid is supplied; a test piece mounting member for mounting a test piece rotatably and immovably in the chamber; a nozzle body having a reference surface opposed to a test surface of the test piece mounted on the test piece mounting member and connecting the chamber to the flow path; and means for moving the nozzle body with respect to the test surface, wherein the means for moving the nozzle body is configured to move the nozzle body toward the test surface of the test piece so as to allow the reference surface to come into contact with the test surface of the test piece and to coordinate the test surface with the reference surface; and the means for moving the nozzle body is also configured to separate the nozzle body from the test surface in such a way as to position the reference surface at a predetermined distance apart from the test surface and to form a channel for the test liquid.

## Description

### Technical Field

This invention relates to a corrosion-resistant test device and more specifically relates to the corrosion-resistant test device used in a corrosion-resistant test for a material for a channel through which a liquid passes.

### Background Art

It is found that a flow path used in various types of industrial facilities such as an industrial plant is electrochemically corroded and physically eroded particularly at its movable part such as a pump, at its curved part, or at its widening or narrowing part, by a circulating liquid.

For example, a boiler system in a thermal power generation plant or the like usually uses a flow path made of carbon steel; and it is found that the flow path in the boiler system is thinned at its part where a water flow is high in turbulence or at its part where shearing strength increases because a protective oxide layer is locally deteriorated by high-temperature-and-pressure boiler water.

Such a problem arises not only at a flow path for high-temperature-and-pressure boiler water but also at flow paths for various liquids.

To establish corrosion-resistant means for addressing a corrosive environment, corrosion-resistant tests have been carried out while materials for a flow path are studied and methods for supplying a fluid are improved.

As is known in the art, a conventional corrosion-resistant test device is provided with a chamber to which a test liquid is supplied; a test piece mounting member mounting a test piece rotatably and immovably in the chamber; a nozzle body having a reference surface opposed to a test surface of the test piece mounted on the test piece mounting member and connecting the chamber to a flow path; and means for moving the test piece by moving the test piece mounting member in the chamber (see, for example, Patent Document 1).

This corrosion-resistant test device is configured to allow the test surface of the test piece to come into contact with the reference surface of the nozzle body by using the means for moving the test piece so as to coordinate a position of the test piece with the reference surface and then to separate the test surface from the reference surface at a predetermined distance in such a way as to form a channel for the test liquid.

### Prior Art Document

### Patent Document

Patent Document 1: Japanese Patent No. 4167337

### Summary of the Invention

### Problem that the Invention is to Solve

Patent Document 1 discloses a corrosion-resistant test device allowing a test surface of a test piece mounted on a test piece mounting member rotatably and immovably to come into contact with a reference surface of a nozzle body by using means for moving the test piece so as to coordinate the test surface with the reference surface and to adjust the test piece at a predetermined position.

The corrosion-resistant test device of Patent Document 1 is easy and accurate to position the test piece and is capable of improving accuracy of a corrosion-resistant test.

The corrosion-resistant test device of Patent Document 1, however, has the possibility of displacing the position of the test piece at the time of separating the test surface from the reference surface at the predetermined distance even after the test surface of the test piece comes into contact with the reference surface, and the position of the test piece is adjusted.

This invention is contrived in view of the above-described circumstances and is to provide a corrosion-resistant test device capable of minimizing a change in position of a test piece.

### Means of Solving the Problem

This invention is to provide the corrosion-resistant test device installed in a flow path of a system which needs a corrosion-resistant test, the corrosion-resistant test device comprising: a chamber to which a test liquid is supplied; a test piece mounting member for mounting a test piece rotatably and immovably in the chamber; a nozzle body having a reference surface opposed to a test surface of the test piece mounted on the test piece mounting member and connecting the chamber to the flow path ; and means for moving the nozzle body with respect to the test surface, wherein the means for moving the nozzle body is configured to move the nozzle body toward the test surface of the test piece so as to allow the reference surface to come into contact with the test surface of the test piece and to coordinate the test surface with the reference surface; and the means for moving the nozzle body is also configured to separate the nozzle body from the test surface in such a way as to position the reference surface at a predetermined distance apart from the test surface and to form a channel for the test liquid.

### Effect of the Invention

To adjust the position of the test piece, this invention is capable of moving the nozzle body toward the test surface of the test piece so as to allow the reference surface to come into contact with the test surface of the test piece and to coordinate the test surface with the reference surface and is capable of separating the nozzle body from the test surface in such a way as to position the reference surface at the predetermined distance apart from the test surface and to form the channel for the test liquid. The position-adjusted test piece, therefore, needs not be moved in the chamber, with the result that a change in position of the test piece can be minimized.

### Brief Description of the Drawings

[Fig. 1] Fig. 1 is a schematic diagram of an overall constitution of a test apparatus used for a gap jet stream method in which corrosion-resistant test devices according to an embodiment of the present invention are installed.
[Fig. 2] Fig. 2 is an explanatory drawing of a structure of the corrosion-resistant test device according to the embodiment of the present invention.
[Fig. 3] Fig. 3 is an explanatory drawing of a motive body alone constituting a test piece mounting member.
[Fig. 4] Fig. 4 is an explanatory drawing of a test piece alone.
[Fig. 5] Fig. 5 is an explanatory drawing indicating a test-liquid flow inside the corrosion-resistant test device placed on the upstream side in the test apparatus illustrated in Fig. 1 used for the gap jet stream method.
[Fig. 6] Fig. 6 is an explanatory drawing indicating a test-liquid flow inside the corrosion-resistant test device placed on the downstream side in the test apparatus illustrated in Fig. 1 used for the gap jet stream method.

### Mode for Carrying Out the Invention

This invention relates to a corrosion-resistant test device installed in a flow path of a system which needs a corrosion-resistant test; the corrosion-resistant test device comprising: a chamber to which a test liquid is supplied, a test piece mounting member for mounting a test piece rotatably and immovably in the chamber, a nozzle body having a reference surface opposed to a test surface of the test piece mounted on the test piece mounting member and connecting the chamber to the flow path, and means for moving the nozzle body with respect to the test surface. The means for moving the nozzle body is configured to move the nozzle body toward the test surface of the test piece so as to allow the reference surface to come into contact with the test surface of the test piece and to coordinate the test surface with the reference surface, and the means for moving the nozzle body is also configured to separate the nozzle body from the test surface in such a way as to position the reference surface at a predetermined distance apart from the test surface and to form a channel for the test liquid.

In the corrosion-resistant test device of this invention, the channel means a plumbing space through which the test liquid flows. The test liquid means a liquid flowing through the channel and used for the corrosion-resistant test, and types of the liquid is not particularly limited.

The chamber means a container into which the test liquid flows, and is connected to the flow path through the nozzle body to be described below.

The nozzle body means a member connecting the chamber to the flow path and has the reference surface opposed to the test surface of the test piece.

The means for moving the nozzle body means a driving mechanism in general for moving the nozzle body with respect to the test surface.

In the corrosion-resistant test device of this invention, the nozzle body may have a threaded hole formed along to a reference axis extending in a vertical direction with respect to the test surface; and the means for moving the nozzle body may comprise a screw threaded into the threaded hole of the nozzle body, and a handle attached to the screw.

This simple structure enables the nozzle body to move precisely and accurately and is capable of providing the corrosion-resistant test device excellent in reliability.

In the corrosion-resistant test device of this invention, the nozzle body may comprise a nozzle opening through which the test liquid flows, the nozzle opening being formed on the reference surface opposed to the test surface.

This structure enables the test liquid to flow easily in a predetermined direction with respect to the test surface by virtue of the nozzle opening through which the test liquid flows and thereby improves test accuracy.

In the corrosion-resistant test device of this invention, the test piece mounting member may comprise a motive body provided with a spherical head, and a driven body provided with a concave portion into which the spherical head is pressed; and one end of the driven body may be coupled to the motive body rotatably and immovably, whereas another end of the driven body may be capable of mounting the test piece.

This structure is capable of increasing degrees of freedom to position the driven body with respect to the motive body because the spherical head of the motive body is pressed into the concave portion of the driven body, with the result that a position of the test piece may be precisely adjusted.

The driven body is configured to be immovable with respect to the motive body because of a frictional force between the spherical head of the motive body and the concave portion of the driven body; therefore, external forces larger than this frictional force cause the driven body to rotate with respect to the motive body and thereby change a position of the driven body.

The above-described structure in which the test piece mounting member comprises the motive body and the driven body may have the driven body integrated with the test piece.

This structure is capable of saving the trouble of mounting the test piece on the driven body by virtue of the integration of the test piece with the driven body and is capable of adjusting a position of the test piece more precisely.

In the following, the corrosion-resistant test device according to the embodiment of this invention will be explained.

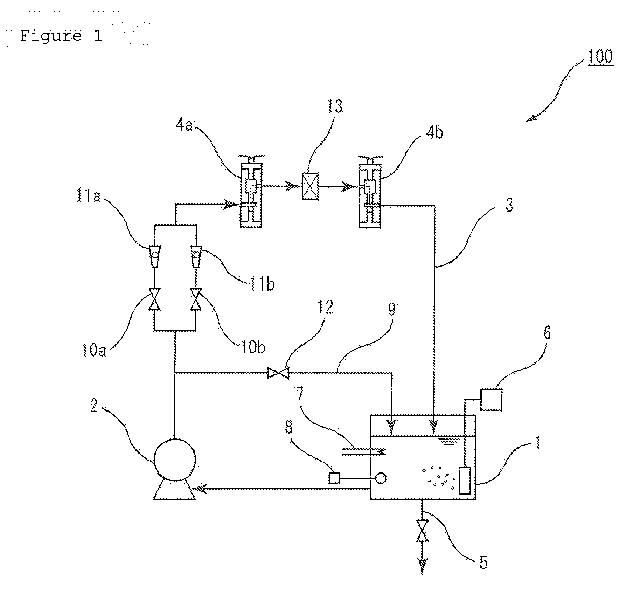

The corrosion-resistant test device according to the embodiment of the present invention will be explained with reference to Figs. 1 to 6. Fig. 1 is a schematic diagram of an overall constitution of the test apparatus used for the gap jet stream method in which the corrosion-resistant test devices according to the embodiment of the present invention are installed.

As illustrated in Fig. 1, a test apparatus 100 used for the gap jet stream method is constituted mainly of a water-conditioning tank 1; a pump 2; a flow path 3 for circulating a test liquid supplied from the water-conditioning tank 1 driven by the pump 2; corrosion-resistant test devices 4a and 4b installed in the flow path 3 for circulating the test liquid; and a flow path 5 for discharging the test liquid supplied to the flow path 3 for circulating the test liquid.

The water-conditioning tank 1 storing the test liquid is provided with means 6 for supplying air or a nitrogen gas to the stored test liquid, a heater 7, and a DO meter 8 for measuring a dissolved oxygen concentration in the test liquid.

Installed in the flow path 3 for circulating the test liquid are the pump 2; a bypass 9 for regulating a flow rate; valves 10a and 10b for regulating the flow rate; flowmeters 11a and 11b; and the corrosion-resistant test devices 4a and 4b, all of the components being installed in this order in a downstream direction from the water-conditioning tank 1. Installed in the bypass 9 for regulating the flow rate is a valve 12.

The corrosion-resistant test devices 4a and 4b are installed in the flow path 3 in series and have a filter 13 placed therebetween. The heater 7 and the corrosion-resistant test devices 4a and 4b are provided with temperature indicating controllers (not illustrated), respectively.

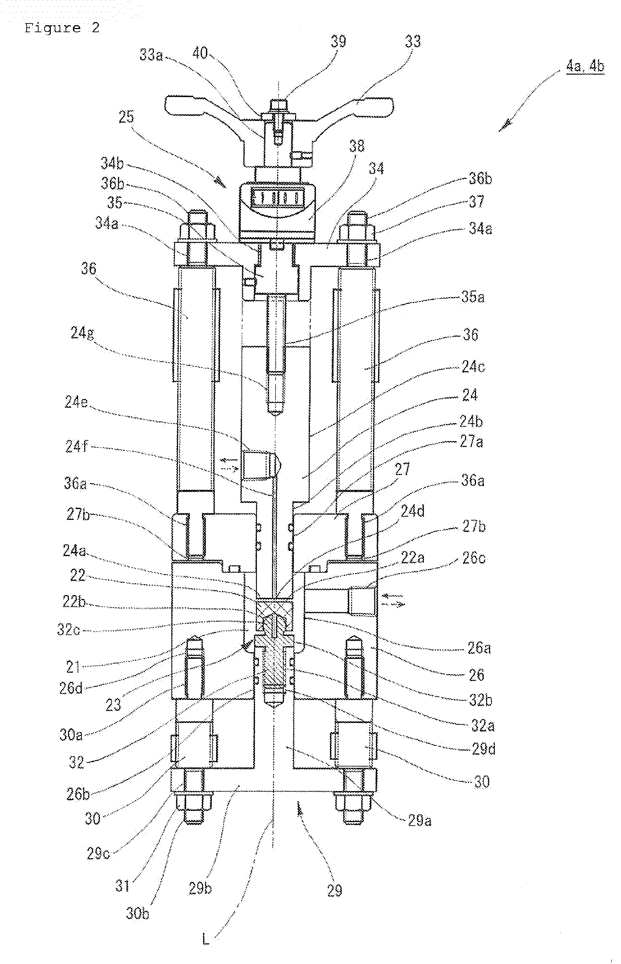

Fig. 2 is an explanatory drawing of a structure of the corrosion-resistant test device according to the embodiment of the present invention.

As illustrated in Fig. 2, each of the corrosion-resistant test devices 4a and 4b installed in the test apparatus 100 used for the gap jet stream method is provided with a chamber 21 to which the test liquid is supplied; a test piece mounting member 23 mounting a test piece 22 rotatably and immovably in the chamber 21; a nozzle body 24 having a reference surface 24a opposed to a test surface 22a of the test piece 22 mounted on the test piece mounting member 23 and connecting the chamber 21 to the flow path 3 for circulating the test liquid; and means 25 for moving the nozzle body 24 with respect to the test surface 22a.

The chamber 21 is formed in a body 26 having a reference axis L passing through its center and has a concave part 26a covered with a cover member 27. The cover member 27 joints to the body 26 by means of bolts although these bolts are not illustrated in Fig. 2.

The body 26 has a through-hole 26b formed parallel to the reference axis L and communicating with the concave part 26a forming the chamber 21, and the concave part 26a communicates with a connection opening 26c in such a way that the connection opening 26c is perpendicular to the reference axis L. The connection opening 26c connects the flow path 3 for circulating the test liquid to the chamber 21, and the test liquid flows through the connection opening 26c as indicated by a solid arrow and a dashed arrow. Inserted into the through-hole 26b from outside is a holding member 29 holding the test piece mounting member 23 to be described below.

The holding member 29 is constituted of a shaft 29a extending along the reference axis L to hold the test piece mounting member 23, and a base part 29b extending in a direction perpendicular to the reference axis L to anchor the shaft 29a at a predetermined position with respect to the body 26.

The holding member 29 is fixed to the body 26 by means of cylindrical spacers 30, each of the spacers 30 having a screw 30a at its one end and a screw 30b at another end to fix the holding member 29 to the body 26. More specifically, the screw 30a at the one end of the spacer 30 is threaded into a threaded hole 26d in the body 26; and then the screw 30b at the other end of the spacer 30 is inserted into a through-hole 29c in the base part 29b and is fixedly tightened by a screw nut 31.

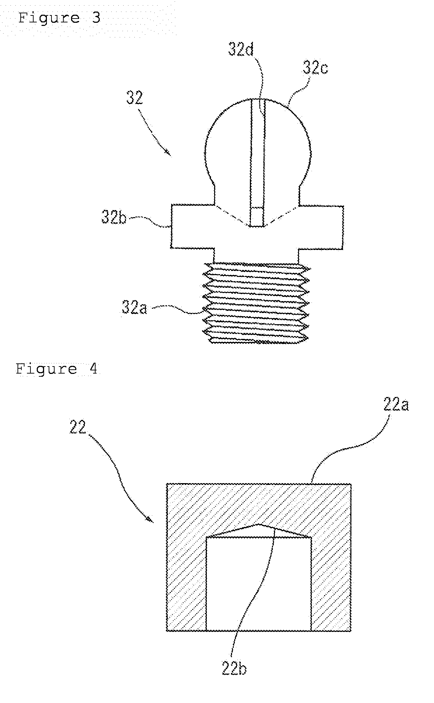

Fig. 3 is an explanatory drawing of the motive body alone constituting the test piece mounting member, and Fig. 4 is an explanatory drawing of the test piece alone.

As illustrated in Figs. 2 and 3, a motive body 32 constituting the test piece mounting member 23 according to the embodiment of the present invention is provided with a screw 32a extending along the reference axis L; a flange 32b projecting in a direction perpendicular to the reference axis L; and a spherical head 32c formed in such a way as to project from the flange 32b to be parallel to the reference axis L. The motive body 32 is made of an insulating material for electrically insulating the test piece 22 from the holding member 29, and the spherical head 32c has a cross notch 32d as viewed from above.

As illustrated in Figs. 2 and 4, the test piece 22 is cylindrical and is made of a material such as carbon steel; and the test piece 22 has the flat test surface 22a perpendicular to the reference axis L, and a concave portion 22b formed on the back side of the test surface 22a.

As illustrated in Fig. 2, the spherical head 32c of the motive body 32 is pressed into the concave portion 22b of the test piece 22 so that the test piece 22 is mounted on the motive body 32 rotatably and immovably. The test piece 22 is immovable with respect to the motive body 32 because of a frictional force between the spherical head 32c and the concave portion 22b. In the case where external forces larger than this frictional force are applied to the test piece 22, the test piece 22 rotates and slides along the spherical head 32c of the motive body 32.

The cross notch 32d carved in the spherical head 32c of the motive body 32 enables the spherical head 32c to be elastically deformed upon pressing the spherical head 32c into the concave portion 22b of the test piece 22 and thereby enables the test piece 22 to be easily mounted on the motive body 32.

The screw 32a of the motive body 32 is threaded into a threaded hole 29d formed at a tip of the shaft 29a of the holding member 29 so as to fix the holding member 29 along the reference axis L.

In the embodiment of the present invention, the test piece 22 is directly mounted on the motive body 32; and the test piece 22 itself functions as a driven body coupled to the motive body 32 rotatably and immovably. In other words, the test piece 22 is formed in such a way as to be integrated with the driven body.

As illustrated in Fig. 2, the cover member 27 encompassing the chamber 21 together with the body 26 has a through-hole 27a formed along the reference axis L; and inserted into the through-hole 27a is the nozzle body 24 connecting the chamber 21 to the flow path 3 for circulating the test liquid.

The nozzle body 24 comprises a small-diameter part 24b having a small diameter, and a large-diameter part 24c having a large diameter; and the small-diameter part 24b is provided at its tip with the reference surface 24a opposed to the test surface 22a of the test piece 22. The embodiment of the present invention exemplifies the test surface 22a intersecting at a 90-degree angle with the reference axis L; however, the test surface 22a may intersect with the reference axis L at an angle other than the 90-degree angle.

The reference surface 24a is provided with a nozzle opening 24d through which the test liquid flows. The large-diameter part 24c is provided at its side surface with a connection opening 24e connected to the flow path 3 for circulating the test liquid, and the connection opening 24e is connected to the nozzle opening 24d through a channel 24f extending along the reference axis L. The test liquid flows through the connection opening 24e as indicated by a solid arrow and a dashed arrow.

The large-diameter part 24c of the nozzle body 24 has a threaded hole 24g formed along the reference axis L, and the nozzle body 24 is movably supported by the means 25 for moving the nozzle body by means of the threaded hole 24g.

The connection opening 24e formed on the movable nozzle body 24 is connected to the flow path 3 for circulating the test liquid through a flexible accordion pipe, a nylon tube, or the like (not illustrated).

The means 25 for moving the nozzle body is constituted mainly of a handle 33, a supporting member 34 supporting the handle 33, and a shaft 35 supported on the handle 33 and provided at its lower end with a screw 35a.

The supporting member 34 supporting the handle 33 is fixed to the cover member 27 by means of cylindrical spacers 36, each of the spacers 36 having a screw 36a at its one end and a screw 36b at another end to fix the supporting member 34 to the cover member 27. More specifically, the screw 36a at the one end of the spacer 36 is treaded into a threaded hole 27b of the cover member 27; and then the screw 36b at the other end of the spacer 36 is inserted into a through-hole 34a in the supporting member 34 and is fixedly tightened by a screw nut 37.

The supporting member 34 and the handle 33 have a bearing-equipped collar 38 placed therebetween whereby the handle 33 can be supported on the supporting member 34 while having a predetermined space from the supporting member 34.

The handle 33 has a through-hole 33a formed along the reference axis L. Inserted into this through-hole 33a is an upper end of the shaft 35. The shaft 35 is fixed to the handle 33 by means of a bolt 39 and a washer 40. This enables the shaft 35 to be attached to the handle 33 along the reference axis L.

The supporting member 34 has a shaft through-hole 34b formed along the reference axis L, and the shaft 35 is provided at its lower end with the screw 35a penetrating the shaft through-hole 34b, so that this screw 35a is threaded into the threaded hole 24g of the nozzle body 24.

Rotating the handle 33 counterclockwise allows the screw 35a provided at the lower end of the shaft 35 to be threaded into the threaded hole 24g of the nozzle body 24 shallowly whereby the nozzle body 24 is moved to bring the reference surface 24a close to the test surface 22a.

Rotating the handle 33 clockwise allows the screw 35a provided at the lower end of the shaft 35 to be threaded into the threaded hole 24g of the nozzle body 24 deeply whereby the nozzle body 24 is moved to distance the reference surface 24a from the test surface 22a.

The test piece 22 is placed in each of the corrosion-resistant test devices 4a and 4b in the following way: firstly, the spherical head 32c of the motive body 32 constituting the test piece mounting member 23 is pressed into the concave portion 22b of the test piece 22; and then the screw 32a of the motive body 32 is threaded into the threaded hole 29d of the holding member 29 so that the motive body 32 is fixed to the holding member 29.

Secondly, the holding member 29 to which the motive body 32 is fixed is inserted into the through-hole 26b of the body 26 and is fixed by means of the screw nut 31.

At this stage, the test piece 22 is simply placed on the spherical head 32c of the motive body 32; and its position is not yet adjusted; therefore, it is not known whether the test surface 22a is perpendicular to the reference axis L-namely, it is not known whether the test surface 22a is parallel to the reference surface 24a.

In the embodiment of the present invention, the nozzle body 24 is moved inside the chamber 21 by using the means 25 for moving the nozzle body; and the reference surface 24a comes into contact with the test surface 22a of the test piece 22, so that the test surface 22a is coordinated with the reference surface 24a to adjust the position of the test piece 22.

More specifically, the handle 33 of the means 25 for moving the nozzle body is rotated counterclockwise so that the nozzle body 24 is moved inside the chamber 21 toward the test surface 22a of the test piece 22.

Once the reference surface 24a of the nozzle body 24 comes into contact with the test surface 22a of the test piece 22, and the position of the test piece 22 is adjusted in such a way that the test surface 22a is coordinated with the reference surface 24a, the test surface 22a comes to be parallel to the reference surface 24a, and then the handle 33 comes to stop rotating.

Thirdly, the handle 33 is rotated clockwise; and the nozzle body 24 in the chamber 21 is separated from the test surface 22a in such a way as to position the reference surface 24a at a predetermined distance apart from the test surface 22a.

This allows the test surface 22a of the test piece 22 and the reference surface 24a of the nozzle body 24 to have a space formed therebetween with the predetermined distance and thereby is capable of carrying out a corrosion-resistant test with a high degree of accuracy.

In the embodiment of the present invention, the position-adjusted test piece 22 needs not be moved in the chamber 21, with the result that a change in position of the test piece 22 can be minimized.

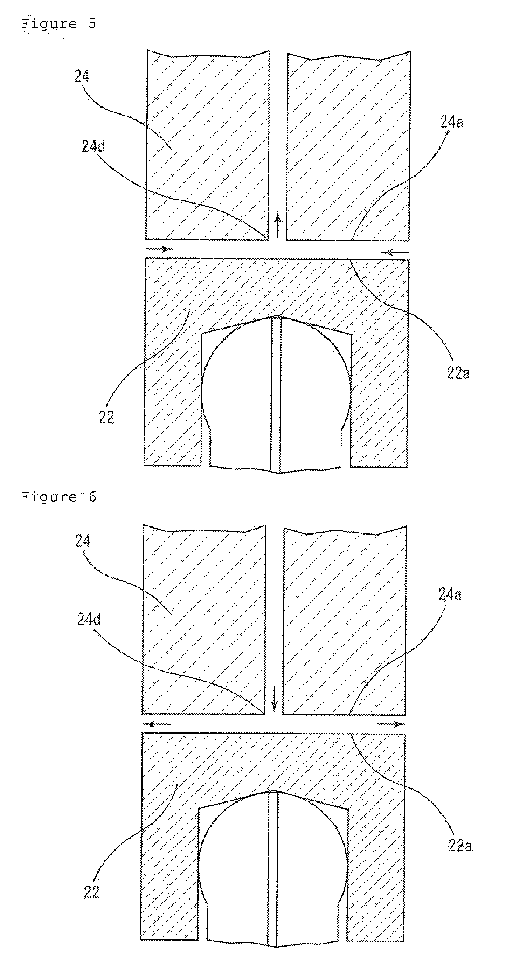

Fig. 5 is an explanatory drawing indicating a test-liquid flow inside the corrosion-resistant test device placed on the upstream side in the test apparatus illustrated in Fig. 1 used for the gap jet stream method; and Fig. 6 is an explanatory drawing indicating a test-liquid flow inside the corrosion-resistant test device placed on the downstream side in the test apparatus illustrated in Fig. 1 used for the gap jet stream method.

Figs. 1 and 5 illustrate that the test liquid is supplied to the corrosion-resistant test device 4a, which is placed on the upstream side, through the connection opening 26c (see Fig. 2) formed on the body 26. The test liquid then flows through the space formed between the test surface 22a of the test piece 22 and the reference surface 24a of the nozzle body 24 toward the nozzle opening 24d of the nozzle body 24.

The test-liquid flow indicated in Fig. 5 is a laminar flow-not a turbulent flow creating high turbulence-and the laminar flow shows conditions of the test surface 22a such as corrosion and erosion.

Figs. 1 and 6 illustrate that the test liquid is supplied to the corrosion-resistant test device 4b, which is placed on the downstream side, through the connection opening 24e (see Fig. 2) formed on the nozzle body 24. The test liquid is then ejected from the nozzle opening 24d of the nozzle body 24 toward the test surface 22a of the test piece 22 and flows through the space formed between the test surface 22a and the reference surface 24a toward an outer edge of the test surface 22a.

The test-liquid flow indicated in Fig. 6 is a turbulent flow creating high turbulence, and the turbulent flow shows conditions of the test surface 22a such as corrosion and erosion.

After being subjected to the corrosion-resistant test for a certain period of time, the test piece 22 is removed from the corrosion-resistant test devices 4a and 4b each; and the conditions of the test surface 22a such as corrosion and erosion are observed and measured by a surface roughness meter, an electron microscope, etc. The laminar flow and the turbulent flow are used for checking the conditions of the test piece 22a such as corrosion and erosion.

In the embodiment of the present invention as explained in detail above, the position of the test piece 22 can be adjusted by moving the nozzle body 24, with the result that the position-adjusted test piece 22 needs not be moved in the chamber 21 and that a change in position of the test piece 22 can be minimized.

As a result, more reliable corrosion-resistant tests can be carried out; and useful data thereby obtained can prevent various flow paths such as a boiler system from being corroded and eroded.

In the above-described embodiment, used as the means 25 for moving the nozzle body are the handle 33; the supporting member 34 supporting the handle; and the shaft 35 supported on the handle 33 and threaded into the threaded hole 24g of the nozzle body 24; however, the means 25 for moving the nozzle body is not limited to these components. It is also desirable that the means for moving the nozzle body uses a rack-and-pinion technique for moving a lens tube up and down in an optical microscope.

Moreover, in the above-described embodiment, the reference surface 24a of the nozzle body 24 is separated from the test surface 22a of the position-adjusted test piece 22 at the predetermined distance by manually rotating the handle 33; however, the corrosion-resistant test device may be equipped with a known optical-path-difference-using autofocus device to separate the reference surface 24a of the nozzle body 24 from the test surface 22a of the position-adjusted test piece 22 at the predetermined distance automatically.

### Explanation of Reference Numerals

- 4a and 4b:: corrosion-resistant test devices
- 21:: chamber
- 22:: test piece
- 22a:: test surface
- 23:: test piece mounting member
- 24:: nozzle body
- 24a:: reference surface
- 24d:: nozzle opening
- 24e and 26c:: connection openings
- 24f:: channel
- 24g:: threaded hole
- 25:: means for moving the nozzle body
- 32:: motive body
- 32c:: spherical head
- 33:: handle
- 34:: supporting member
- 35:: shaft
- 35a:: screw

## Claims

1. A corrosion-resistant test device installed in a flow path of a system which needs a corrosion-resistant test, the corrosion-resistant test device comprising:
a chamber to which a test liquid is supplied; a test piece mounting member for mounting a test piece rotatably and immovably in the chamber; a nozzle body having a reference surface opposed to a test surface of the test piece mounted on the test piece mounting member and connecting the chamber to the flow path; and means for moving the nozzle body with respect to the test surface,
wherein the means for moving the nozzle body is configured to move the nozzle body toward the test surface of the test piece so as to allow the reference surface to come into contact with the test surface of the test piece and to coordinate the test surface with the reference surface; and
the means for moving the nozzle body is also configured to separate the nozzle body from the test surface in such a way as to position the reference surface at a predetermined distance apart from the test surface and to form a channel for the test liquid.

2. The corrosion-resistant test device according to claim 1, wherein the nozzle body has a threaded hole formed along a reference axis extending in a vertical direction with respect to the test surface; and the means for moving the nozzle body comprises a screw threaded into the threaded hole of the nozzle body, and a handle attached to the screw.

3. The corrosion-resistant test device according to claim 1 or 2, wherein the nozzle body comprises a nozzle opening through which the test liquid flows, the nozzle opening being formed on the reference surface opposed to the test surface.

4. The corrosion-resistant test device according to any one of claims 1 or 3, wherein the test piece mounting member comprises a motive body provided with a spherical head, and a driven body provided with a concave portion into which the spherical head is pressed; and one end of the driven body is coupled to the motive body rotatably and immovably, whereas another end of the driven body is capable of mounting the test piece.

5. The corrosion-resistant test device according to claim 4, wherein the driven body is integrated with the test piece.
